(19) **Europäisches Patentamt**

**European Patent Office**

**Office européen des brevets**

(11) Veröffentlichungsnummer : **0 291 810 B1**

# (12) EUROPÄISCHE PATENTSCHRIFT

(45) Veröffentlichungstag der Patentschrift :
07.08.91 Patentblatt 91/32

(51) Int. Cl.⁵ : **A01D 78/10**

(21) Anmeldenummer : 88107416.5

(22) Anmeldetag : 09.05.88

(54) Heuwerbungsmaschine.

(30) Priorität : 20.05.87 DE 3716927

(43) Veröffentlichungstag der Anmeldung :
23.11.88 Patentblatt 88/47

(45) Bekanntmachung des Hinweises auf die
Patenterteilung :
07.08.91 Patentblatt 91/32

(84) Benannte Vertragsstaaten :
AT CH FR GB IT LI NL

(56) Entgegenhaltungen :
EP-A- 0 203 023
DE-A- 3 030 222
DE-A- 3 031 837

(73) Patentinhaber : GREENLAND GMBH & CO. KG
Erwin-Dietrich-Platz 1
W-7702 Gottmadingen (DE)

(72) Erfinder : Maier, Martin
Hilzingerstrasse 23
W-7702 Gottmadingen (DE)
Erfinder : Wessel, Ulrich
Hilzingerstrasse 33
W-7702 Gottmadingen (DE)
Erfinder : Eisenmann, Bernhard
Leipferdingerstrasse 12
W-7708 Tengen 1 (DE)

(74) Vertreter : Patentanwälte Grünecker,
Kinkeldey, Stockmair & Partner
Maximilianstrasse 58
W-8000 München 22 (DE)

EP 0 291 810 B1

Jouve, 18, rue Saint-Denis, 75001 PARIS

**Beschreibung**

Die Erfindung betrifft eine Heuwerbungsmaschine gemäß dem Oberbegriff des Patentanspruchs 1.

Bei einer aus der DE-A-3030222 bekannten Heuwerbungsmaschine sind die beiden außenliegenden Rechkörper mit ihren Tragrohren mittels eines gemeinsamen, einfach wirkenden Hydraulikzylinders, nämlich eines Druckzylinders, in die Transportstellung der Maschine hochschwenkbar. Der Hydraulikzylinder ist über beidseitige Lenkerverbindungen mit den Tragrohren gekoppelt. Im Schwenkweg der Lenkerverbindungen sind Federspeicher angeordnet, die in der Transportstellung der Maschine so weit vorgespannt sind, daß sie bei drucklosem Hydraulikzylinder die beiden Körper zumindest über ihre Totpunktlagen nach außen in Richtung auf die Arbeitsstellung drücken. Ein bezüglich der Maschinenmitte symmetrisches Hochschwenken bzw. Absenken der Rechkörper ist bei dieser Ausbildung schwierig. Beim Umstellen in die Arbeitsstellung der Maschine können die Rechkörper in der Transportlage hängenbleiben, weil die Federspeicher mit ungünstigen Hebelarmen zur Wirkung kommen und weil die Lenkerverbindung zu den Tragrohren ein für das korrekte Arbeiten der Maschine notwendiges Spiel aufweisen, das die Übertragung der Rückstellkraft auf die Rechkörper beeinträchtigt.

Der Erfindung liegt die Aufgabe zugrunde, eine Heuwerbungsmaschine der eingangs genannten Art zu schaffen, die baulich einfach und funktionssicher ist.

Die gestellte Aufgabe wird mit den im kennzeichnenden Teil des Anspruchs 1 enthaltenen Merkmalen gelöst.

Bei dieser Ausbildung ist für jede Maschinenseite ein eigener einfach wirkender Zugzylinder für das Hochschwenken zumindest des außenliegenden Tragrohrs vorgesehen, wodurch die Rechkreisel an beiden Maschinenseiten nicht nur einzeln sondern auch exakt symmetrisch hochschwenkbar sind. Der Federspeicher wirkt in der Transportstellung direkt auf das Tragrohr, so daß bei drucklosem Druckzylinder sichergestellt ist, daß der Rechkörper zuverlässig über seine Totpunktlage hinaus in Richtung auf die Arbeitsstellung gedrückt wird und dann unter seinem Eigengewicht absinkt.

Vorteilhafte Ausführungsformen gehen aus den Unterlagen hervor.

In der Zeichnung ist ein Ausführungsbeispiel der Erfindung dargestellt und wird im folgenden näher erläutert.

Hierbei zeigen :

Fig. 1    die Rückansicht einer mehrkreisligen Heuwerbungsmaschine ;
Fig. 2    einen Federspeicher in schematischer Ansicht entsprechend seiner Einbaulage in Fig. 1.

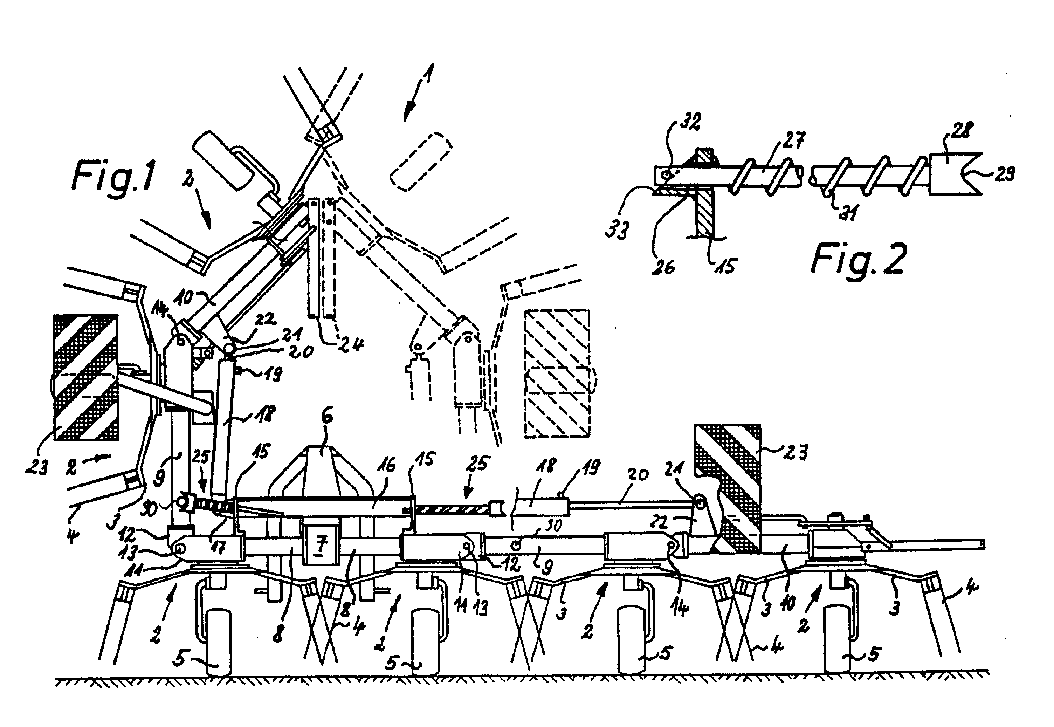

Bei der in Fig. 1 schematisch in Rückansicht wiedergegebenen Heuwerbungsmaschine handelt es sich um einen Kreiselzettwender 1 mit insgesamt sechs umlaufenden Rechkörpern 2, die Zinkentragarme 3 aufweisen. An den Zinkentragarmen 3 sind Rechzinken 4 befestigt.

Die Rechkörper 2 sind über Laufräder 5 auf der Bodenoberfläche abgestützt.

Der Kreiselzettwender verfügt über eine Anbaurahmen 6, über den er an einen selbst nicht dargestellten Schlepper angeschlossen wird.

Von der Schlepperzapfwelle aus besteht eine Antriebsverbindung zu einem Eingangsgetriebe 7 des Kreiselzettwenders 1. Vom Eingangsgetriebe 7 aus wird zu beiden Seiten eine mehrteilig ausgebildete Antriebswelle, die jeweils die Rechkörper 2 der linken bzw. rechten Maschinenseite — bezogen auf die Fahrtrichtung — antreibt, angetrieben.

Die mehrteilige Antriebswelle jeder Maschinenseite ist innerhalb eines inneren Tragrohrs 8, eines mittleren Tragrohrs 9 und eines äußeren Tragrohrs 10 drehbar gelagert.

Das mittlere Tragrohr 9 ist mit dem inneren Tragrohr 8 über Lagergabeln 11 und 12 schwenkbar verbunden in der Weise, daß das mittlere Tragrohr 9 um eine in Fahrtrichtung weisende Schwenkachse 13 schwenkbar ist. In analoger Weise ist die Verbindung des äußeren Tragrohrs 10 mit dem mittleren Tragrohr 9 um eine weitere, in Fahrtrichtung weisende Schwenkachse 14, ausgestaltet.

Die linke und rechte Maschinenseite ist symmetrisch ausgebildet, sodaß die Schwenkachsen 13 und 14 auf beiden Maschinenseiten vorhanden sind.

Parallel und oberhalb zu den inneren Tragrohren 8 ist mit Abstand an vertikal stehenden Haltern 15 eine Quertraverse 16 befestigt, die die inneren Tragrohre 8 und das Eingangsgetriebe 7 überbrückt. An der Quertraverse 16 sind beidseitig in an sich bekannter Weise Lagergabeln 17 (es ist lediglich die in Fahrtrichtung links liegende Lagergabel 17 in der Zeichnung angedeutet) befestigt.

In den Lagergabeln 17 sind einfachwirkende Zugzylinder 18 eingehängt. Die Hydraulikanschlüsse 19 dieser einfachwirkenden Zugzylinder 18 sind mit der nicht dargestellten Schlepperhydraulik verbunden. Die Kolbenstangen 20 der einfach-wirkenden Zugzylinder 18 sind an ihren freien Enden 21 gelenkig mit vertikal gerichteten Hebeln 22 verbunden.

Die vertikal gerichteten Hebel 22 sind an den der Schwenkachse 14 zugewandten inneren Enden der äußeren Tragrohre 10 befestigt.

Aus der Darstellung ist ersichtlich, daß die einfachwirkenden Zugzylinder 18 zu beiden Seiten der Quertraverse 16 so angelenkt sind, daß jeder Zugzylinder die Schwenkachsen 13 und 14 einer jeden Maschinenseite überbrücken.

In Fig. 1 ist die rechte Maschinenseite in ihrer Arbeitsposition wiedergegeben. Die Rechkörper 2 können sich über die Laufräder 5 an die Bodenoberfläche anpassen, da das mittlere Tragrohr 9 um die Schwenkachse 13 und das äußere Tragrohr 10 um die Schwenkachse 14 in Vertikalrichtung pendeln kann.

Die linke Maschinenseite ist in ihrer der Transportstellung entsprechenden Lage gezeichnet (der äußere Teil der rechten Maschinenseite ist in gestrichelt gezeichneten Linien ergänzend angedeutet).

Die mittleren und äußeren Tragrohre 9 und 10 werden mitsamt den daran drehbar gelagerten Rechkörpern 2 aus der (rechts gezeichneten) Arbeitsstellung in die (links gezeigte) Transportstellung durch Beaufschlagen der einfach wirkenden Zugzylinder 18 mit Hydraulikflüssigkeit überführt. Hierbei werden die Kolbenstangen 20 eingefahren. Zunächst werden die beiden äußeren Tragrohre 10 um die Schwenkachsen 14 nach oben und innen verschwenkt, bis ab Erreichen eines durch selbst nicht dargestellte Anschläge vorgegebenen Schwenkwinkels im Verlaufe der weiteren Einzugsbewegung der Kolbenstangen 20 eine Mitnahme der mittleren Tragrohre 9 erfolgt, bis die gezeichnete Transportstellung erreicht ist. Bei diesem Vorgang werden Warntafeln 23 so verschwenkt, daß sie die mittleren Rechkörper 2 jeder Maschinenseite in ihrer Transportstellung nach rückwärts abschirmen. Auf diese Weise ist ein guter Unfallschutz gewährleistet. Ferner werden bei diesem Vorgang äußere Schutzbügel 24, die in Arbeitsposition etwa horizontal liegen, so nach unten verschwenkt, daß sie eine etwa vertikal gerichtete Position einnehmen. Die in Transportstellung überführten Tragrohre 9 und 10 bilden zusammen mit den inneren Tragrohren 8 etwa die Form eines 5-Ecks. Auf diese Weise wird eine geringe Transportbreite erreicht.

Bei der vorstehend beschriebenen Heuwerbungsmaschine wird die Verwendung von einfachen Zugzylindern 18 durch Federspeicher 25 ermöglicht, die beidseitig von der Quertraverse 16 an den vertikal stehenden Haltern 15 befestigt sind.

Jeder Federspeicher 25 ist prinzipiell wie folgt aufgebaut (Fig. 2) :

Der vertikale Halter 15 ist mit einer Bohrung 26 versehen, durch die ein Bolzen 27 gesteckt ist. Am freien Ende des Bolzens 27 ist ein Widerlager 28 z.B. durch Schweißen befestigt, das eine Fangtasche 29 aufweist. Die Fangtasche 29 arbeitet mit jeweils einem Anschlag 30 zusammen. Die Anschläge 30 sind an den mittleren Tragrohren 9 befestigt (Fig. 1).

Der Bolzen 27 ist von einer Druckfeder 31 umgeben, die zwischen dem Halter 15 und dem Widerlager 28 eingeschaltet ist.

Ein Querstift 32, der an dem dem Widerlager 28 gegenüberliegenden Ende des Bolzen 27 eingepreßt ist, sichert den Bolzen 27. In der in Fig. 2 wiedergegebenen Ausgangslage des Federspeichers 25 steht die Druckfeder 31 unter einer geringen Vorspannung. Der Bolzen 32 liegt an einer schrägen Anlauffläche 33 am Halter 15 an. Die Anlauffläche 33 bewirkt, daß der Bolzen 27 durch Anlage des Querstifts 32 selbsttätig so in die Ausgangslage überführt wird, daß das Widerlager 28 etwa vertikal steht und die Fangtasche 29 somit nach außen geöffnet ist.

Werden nun die mittleren Tragrohre 9 nach oben in ihre Transportstellung eingeschwenkt, gelangen die Anschläge 30 in den Fangtaschen 29 zur Anlage. Im weiteren Verlauf der Schwenkbewegung werden die Druckfedern 31 zusammengedrückt und dabei werden die Bolzen 27 nach innen zur Maschinenmitte hin verschoben. Am Ende der Hochschwenkbewegung der mittleren Tragrohre 9 haben die Zugfedern 31 ihre größte Vorspannung erreicht.

Die Federspeicher 25 haben die Aufgabe, das überführen der in Transportstellung befindlichen Maschine in ihre Arbeitsstellung wie folgt zu unterstützen :

Zum Herablessen der in Transportstellung befindlichen mittleren Tragrohre 9 und äußeren Tragrohre 10 wird der Hydraulikanschluß 19 der einfach wirkenden Zugzylinder 18 über das nicht dargestellte Steuergerät der Schlepperhydraulik mit dem Rücklauf verbunden. In den Rücklaufleitungen ist eine Senkdrossel wirksam, die die Abwärtsbewegung der mittleren und äußeren Tragrohre 9 und 10 bremst, sodaß ein bestimmter Wert nicht überschritten wird. Die Federspeicher üben auf die Tragrohre 9 und 10 eine Rückstellkraft aus, die ausreichend ist, um zunächst die mittleren Tragrohre 9 nach außen zu verschwenken. Der Verschiebeweg eines jeden Federspeichers 25 ist hierbei so groß, daß die um ca. 90° nach oben und innen eingeschwenkten mittleren Tragrohre 9 über eine mögliche Totpunktlage hinweggeschwenkt werden. Somit ist sichergestellt, daß die Tragrohre 9 und 10 unter Berücksichtigung des nach innen verlagerten Schwerpunktes einer jeden Maschinenseite aus der Transportstellung sicher in die Arbeitsstellung überführt werden, ohne daß hierzu ein doppeltwirkender Hydraulikzylinder für jede Maschinenseite und die hierfür notwendigen, aufwendigen Hydraulikventile erforderlich wären. Zum überführen der Maschine in die Arbeitsstellung ist es vorteilhaft, die Federspeicher 25 im Bereich der innen liegenden Schwenkachsen anzuordnen. Mit dieser Anordnung wird erreicht, daß zunächst ausschließlich die mittleren Tragrohre 9 nach außen verschwenkt werden, bis die Laufräder 5 der an ihnen gelegerten Rechkörper 2 den Boden erreicht haben. Erst dann folgen die äußeren Tragrohre 10 dieser Schwenkbewegung — infolge des Eigengewichts — nach unten. Auf diese Weise werden unkontrollierte Bewegungen und harte Stöße vermieden.

**Patentansprüche**

1. Heuwerbungsmaschine, insbesondere Kreiselzettwender, mit einem an einem Schlepper anschließbaren Maschinenrahmen, in dem an Tragrohren (8, 9, 10) mehrere Rechkörper (2) zur Drehung antreibbar gelagert sind, von denen — bezogen auf die Maschinenmitte — außenliegende Rechkörper (2) mit ihrem jeweiligen Tragrohr (9, 10) mittels eines enfach wirkenden Hydraulikzylinders um eine in Fahrtrichtung liegende Achse (13, 14) mit einem Anschlag (30) gegen einen Federspeicher (25) in eine Transportstellung hochstellbar ist, wobei der Federspeicher (25) in der Transportstellung eine Rückstellkraft speichert und den Rechkörper (2) bei drucklosem Hydraulikzylinder in Richtung zu einer Arbeitsstellung über eine Totpunktlage hinwegdrückt, **dadurch gekennzeichnet,** daß für jede Maschinenseite ein einfach wirkender Zugzylinder (18) zum Hochschwenken zumindest des außenliegenden Tragrohrs (10) vorgesehen ist, und daß der Federspeicher (25) ein federbelastetes Widerlager (28) mit einer Fangtasche (29) aufweist, die beim Hochschwenken des Rechkörpers (2) in die Bewegungsbahn des Separaten Anschlags (30) am Tragrohr (9, 10) ragt.

2. Heuwerbungsmaschine nach Anspruch 1, **dadurch gekennzeichnet,** daß das Widerlager (28) an einem Bolzen (27) befestigt ist, daß der Bolzen (27) in einem vertikalen Halter (15) am Maschinenrahmen im wesentlichen axial verschiebbar gelagert ist, und daß zwischen dem Halter (15) und dem Widerlager (28) eine Druckfeder (31) angeordnet ist.

3. Heuwerbungsmaschine nach den Ansprüchen 1 und 2, **dadurch gekennzeichnet,** daß am dem Widerlager (28) Gewandten Ende des Bolzens (27) ein Querstift (32) vorgesehen ist, der in der unbelasteten Ruhelage des Federspeichers (25) zum Ausrichten der Fangtasche (29) auf den Anschlag (30) an einer schrägen Anlauffläche (33) anliegt.

4. Heuwerbungsmaschine nach den vorhergehenden Ansprüchen, **dadurch gekennzeichnet,** daß der Federspeicher (25) — in der Arbeitsstellung — mit Abstand oberhalb der Tragrohre (8, 9, 10) parallel zu diesen liegend angeordnet ist.

5. Heuwerbungsmaschine nach den Ansprüchen 1 und 2, **dadurch gekennzeichnet,** daß der die Fangtasche (29) tragende Bolzen (27) im Halter (15) vertikal nach oben begrenzt verschwenkbar geführt ist.

6. Heuwerbungsmaschine nach Anspruch 1, **dadurch gekennzeichnet,** daß beiden über Hydraulikleitungen mit der Schlepperhydraulik verbundenen Zugzylindern (18) eine Senkdrossel zugeordnet ist.

7. Heuwerbungsmaschine nach Anspruch 1, **dadurch gekennzeichnet,** daß jeder Federspeicher (25) der innenliegenden Schwenkachse (13) des inneren, schwenkbaren Tragrohrs (9) zugeordnet ist.

**Claims**

1. A haymaking machine, particularly a rotary tedder, with a machine frame connectable to a tractor, in which several rake members (2) are mounted to be rotarily propelled on carrier tubes (8, 9, 10), and of which rake members (2) situated externally with respect to the centre of the machine, with their respective carrier tube (9, 10) provided with a stop (30), may be raised around an axis (13, 14) against action of a spring-force-storage (25) into a transport position by means of a single-acting hydraulic cylinder, said spring-force-storage (25) being adapted to store a return force in the transport position of said rake members (2), urging the rake member (2) beyond a dead center position in the direction towards a working position, when said hydraulic cylinder is relieved, **characterised in that** there is provided for each side of the machine a single-acting traction cylinder (18) for upwardly pivoting at least the externally-situated carrier tube (10), and that said spring-force-storage (25) is provided with a spring-loaded abutment (28) with a receiver socket (29), projecting into the path of movement of the separate stop (30) of the carrier tube (9, 10) when the rake member (2) is pivoted upwards.

2. A haymaking machine according to Claim 1, characterised in that the abutment (28) is attached to a bolt (27), that the bolt (27) is mounted in a vertical retaining means (15) on the machine frame so as to be substantially axially displaceable, and that a compression spring (31) is disposed between the retaining means (15) and the abutment (28).

3. A haymaking machine according to Claims 1 and 2, characterised in that there is provided on the end of the bolt (27) facing away from the abutment (28) a transverse pin (32) which, in the unstressed rest position of the·spring-force-storage (25), bears on an oblique stopping surface (33) in order to align the receiver socket (29) to the stop (30).

4. A haymaking machine according to the preceding claims, **characterised in that** said spring-force-storage (25) is disposed distant and above the carrier tubes (8, 9, 10) and parallel thereto, in the working position of rake member (2).

5. A haymaking machine according to Claims 1 and 2, characterised in that the bolt (27) carrying the receiver socket (29) is guided in the retaining means (15) to pivot to a restricted degree upwards.

6. A haymaking machine according to Claim 1, characterised in that a lowering throttle is associated with both traction cylinders (18), which are connected by hydraulic pipes to the tractor's hydraulic system.

7. A haymaking machine according to Claim 1, characterised in that each spring-force-storage (25) is associated with the inwardly-situated pivotal axis (13) of the inner, pivotal carrier tube (9).

## Revendications

1. Faneuse, en particulier épandeur faneur centrifuge avec un bâti de machine pouvant se raccorder à un tracteur, où plusieurs corps de ratissage (2) sont logés en pouvant être entraînés en rotation sur des tubes porteurs (8, 9, 10), dont, en se rapportant au milieu de la machine, le corps de ratissage se trouvant à l'extérieur peut être déplacé, avec son tube porteur (9, 10), au moyen d'un cylindre hydraulique à simple action, autour d'un axe (13, 14) se trouvant dans le sens de l'avance, avec une butée (30) contre un accumulateur à ressort (25) à une position de transport, où l'accumulateur à ressort (25) accumule, à la position de transport, une force de retour et le corps de ratissage (2), alors que le cylindre hydraulique est sans pression, est pressé à une position de travail en passant par un point mort, caractérisée en ce que pour chaque côté de la machine est prévu un cylindre de traction (18) à simple action pour le pivotement vers le haut au moins du tube porteur (10) se trouvant à l'extérieur et en ce que l'accumulateur à ressort (25) présente une butée (28) chargée par ressort et une poche de réception (29), qui lors du pivotement du corps de ratissage (2) vers le haut, dépasse dans le parcours de la butée séparée (30) sur le tube porteur (9, 10).

2. Faneuse selon la revendication 1, caractérisée en ce que la butée (28) est fixée à un boulon (27), en ce que le boulon (27) est logé mobile dans un support vertical (15) sur le bâti de la machine, essentiellement axialement, et ce qu'entre le support (15) et la butée (28) est agencé un ressort de compression (31).

3. Faneuse selon la revendication 1 ou 2, caractérisée en ce que, à l'extrémité du boulon (27) qui est éloignée de la butée (28) est prévue une cheville transversale (32), qui repose sur une surface oblique (33) à l'état non chargé de repos de l'accumulateur à ressort (25) pour l'orientation de la poche de réception (29) sur la butée (30).

4. Faneuse selon l'une quelconque des revendications précédentes, caractérisée en ce que l'accumulateur à ressort (25) est agencé, à sa position de travail, à une certaine distance au-dessus des tubes porteurs (8, 9, 10), en se trouvant parallèle à ceux-ci.

5. Faneuse selon l'une quelconque des revendications 1 ou 2, caractérisée en ce que le boulon (27) supportant la poche de réception (29) est guidé en pivotant dans le support (15) en étant limité verticalement vers le haut.

6. Faneuse selon la revendication 1, caractérisée en ce que les deux cylindres de traction (18) reliés par des conduites hydrauliques au circuit hydraulique du tracteur, présentent un étranglement pour abaisser les corps de ratissage.

7. Faneuse selon la revendication 1, caractérisée en ce qu'à chaque accumulateur à ressort (25) est affecté l'axe interne de pivotement (13) du tube porteur interne pivotant (9).

*Fig.1*

*Fig.2*

EP 0 291 810 B1